# EUROPÄISCHE PATENTSCHRIFT

(11) **EP 1 856 388 B1**
(45) Veröffentlichungstag und Bekanntmachung des Hinweises auf die Patenterteilung: **29.07.2009**
(21) Anmeldenummer: 06723109.2
(22) Anmeldetag: 24.02.2006
(51) Int. Cl.: F02B 37/04, F02B 33/44, F02D 9/02, F02D 9/10, F02B 21/00, F02D 41/00

(54) **EINRICHTUNG ZUR FRISCHLUFTVERSORGUNG EINER TURBOAUFGELADENEN KOLBENBRENNKRAFTMASCHINE UND VERFAHREN ZUM BETRIEB DERSELBEN**
DEVICE FOR SUPPLYING FRESH AIR TO A TURBOCHARGED PISTON INTERNAL COMBUSTION ENGINE AND METHOD FOR OPERATING THE SAME
DISPOSITIF D'ALIMENTATION EN AIR FRAIS POUR UN MOTEUR THERMIQUE A PISTONS A TURBOCOMPRESSEUR ET PROCEDE DE FONCTIONNEMENT ASSOCIE

(30) Priorität: 24.02.2005 DE 102005008405; 28.10.2005 DE 102005051687
(43) Veröffentlichungstag der Anmeldung: 21.11.2007
(73) Patentinhaber: KNORR-BREMSE SYSTEME FÜR NUTZFAHRZEUGE GMBH, 80809 München (DE)
(72) Erfinder: NEMETH, Huba, H-1116 Budapest (HU); GERUM, Eduard, 83026 Rosenheim (DE)
(74) Vertreter: Mattusch, Gundula
(86) Internationale Anmeldenummer: PCT/EP2006/001737
(87) Internationale Veröffentlichungsnummer: WO 2006/089779

(56) Entgegenhaltungen:
- WO-A-20/05064134
- FR-A- 2 833 650
- US-A- 3 673 796
- PATENT ABSTRACTS OF JAPAN Bd. 1995, Nr. 07, 31. August 1995 (1995-08-31) & JP 07 091267 A (KUBOTA CORP), 4. April 1995 (1995-04-04)
- PATENT ABSTRACTS OF JAPAN Bd. 1995, Nr. 01, 28. Februar 1995 (1995-02-28) & JP 06 299879 A (MITSUBISHI MOTORS CORP), 25. Oktober 1994 (1994-10-25)

## Beschreibung

Die Erfindung betrifft eine Einrichtung zur Frischluftversorgung einer turboaufgeladenen Kolbenbrennkraftmaschine mit einem Frischgasleitungsabschnitt als Saugrohr, der eine verstellbare Klappe und einen ersten Endanschluss zur Einströmung sowie einen zweiten Endanschluss zur Ausströmung aufweist, zwischen denen in der rohrartigen Wand eine schwenkbar gelagerte Welle für die verstellbare Klappe vorgesehen ist, die zum Verstellen an eine Verstellvorrichtung angekoppelt ist, wobei zwischen der Klappe und dem zweiten Endanschluss ein Druckluftanschluss mit Öffnung in den rohrartigen Innenraum mündet.

Ferner betrifft die Erfindung auch ein Verfahren zum Betrieb einer solchen Einrichtung.

Es ist eine bekannte Eigenschaft der Kolbenbrennkraftmaschine mit Turboaufladung, dass diese beim Gasgeben im Fahrzeug nur mit gewisser Verspätung reagiert, weil der Turboauflader die gelieferte Luftmenge nur langsam erhöhen kann, was als Turboloch im Drehmomentverlauf benannt ist.

Aus der DE-PS-39 06 312 geht eine Methode und Konstruktion zum Verkleinern, bzw. Verkürzen des Turbolochs hervor, wobei während der Beschleunigung des Dieselmotors aus einem Druckluftspeicher eine bestimmte Luftmenge in das Saugrohr eingeblasen wird, und dazu die Kraftstoff- Einspritzmenge angepasst wird. Der turboaufgeladene Dieselmotor ist besonders für Stadtomnibusse mit Automatikgetriebe und Druckluftbremsanlage geeignet. Die Stadtomnibusse leisten einen bestimmten Fährzyklus, in dem die Belastung und der Drehzahlvorgang des Dieselmotors genau prognostiziert werden kann, so kann die Einblasezeit und die Luftmenge vorbestimmt werden. Ganz andere Bedingungen sind bei Nutzkraftfahrzeugen, die im Fernfahrverkehr eingesetzt werden. Diese fahren keine regelmäßigen Fahrzyklen, die Nutzlast variiert zwischen breiten Grenzen und die Fahrweise des Fahrers kann große Unterschiedlichkeit aufweisen. Durch die obige Konstruktion und Methode können die Probleme nicht behoben werden.

Aus der Patent Abstracts of Japan, Bd. 1995, Nr 07, 31. August 1995 & JP 07091267 A, geht eine Vorrichtung zur Frischluftversorgung einer turboaufgeladenen Kolbenkraftmaschine mit einem Frischluftleitungsabschnitt als Saugrohr hervor. Auch hierbei ist eine Klappe an eine Verstellvorrichtung gekopppelt. Bei dieser bekannten Vorrichtung ist jedoch nicht gewährleistet, dass zu jeder Zeit genügend Druckluft im Druckluftspeicher auch für die anderen Aggregate wie Bremssystem etc verbleibt.

Aufgabe der vorliegenden Erfindung ist es, eine Einrichtung sowie ein Verfahren zu schaffen, womit die Lufteinblasung der Fahrweise und Nutzlast des Fahrzeuges angepasst werden kann, wobei die Einrichtung als eine Montageeinheit in verschiedene Frischgasleitungssysteme von Dieselmotoren eingebaut werden kann.

Die Aufgabe wird ausgehend von einer Einrichtung gemäß dem Oberbegriff von Anspruch 1 in Verbindung mit dessen kennzeichnenden Merkmalen gelöst. Verfahrenstechnisch wird die Aufgabe durch Anspruch 4 gelöst. Die jeweils rückbezogenen abhängigen Ansprüche geben vorteilhafte Weiterbildungen der Erfindung wieder.

Der Vorteil der Erfindung resultiert daraus, dass eine Klappe in der Frischgasleitung elektronisch gesteuert betätigt wird, also nicht nur selbsttätig durch den Frischgasdruck, wie nach dem eingangs genannten Stand der Technik, und dass die Betätigung von der Steuereinheit ermittelt und elektronisch verarbeitet wird, und zwar abhängig von dem Frischgasdruck und vorzugsweise von den Motorparametern.

Nach der Erfindung ist der Druckluftanschluss mit einer Mengenregelvorrichtung versehen, die ein Ventil besitzt, das eine gesperrte und beliebig geöffnete Stellungen aufweist, die Mengenregelvorrichtung weiterhin einen elektrischen/elektronischen Eingang aufweist, der an den Ausgang einer elektronischen Steuereinheit angeschlossen ist, wobei an den zweiten Ausgang der elektronischen Steuereinheit der Eingang der Verstellvorrichtung der Klappe angeschlossen ist, so dass zur voll geöffnete Stellung der Klappe eine voll gesperrte Stellung der Mengenregelvorrichtung zugeordnet ist

An den Eingängen der elektronischen Steuereinheit sind die folgenden Ausgänge angeschlossen:

Ausgang des ersten Druckfühlers, dessen Druckmesser im rohrartigen Innenraum zwischen Klappe und dem ersten Endanschluss zur Einströmung angeordnet ist; Ausgang des zweiten Druckfühlers, dessen Druckmesser im rohrartigen Innenraum zwischen Klappe und dem zweiten Endanschluss zur Ausströmung angeordnet ist.

Nach einer vorteilhaften Ausführung der Erfindung kann in der elektronischen Steuereinheit das Drehmomentanforderungssignal aus den folgenden Quellen stammen: Gaspedal, Antriebsschlupfregelung, Tempomat, elektrisches Stabilisationsprogramm, Fahrerassistenzsystem oder andere Systeme, die dem Motorsteuersystem eine externe Drehmomentanforderung zuleiten.

Nach einer anderen vorteilhaften Ausführung der Erfindung ist zur direkten Betätigung durch die elektronische Steuereinheit die Verstellvorrichtung der Klappe auch als ein Positionsermittlungssensor ausgebildet.

Die Erfindung betrifft weiterhin ein Verfahren zum Verbessern des Beschleunigungs- und Emissionsverhaltens einer Fahrzeug-Kolbenbrennkraftmaschine, insbesondere eines Dieselmotors mit Turboaufladung, wobei deren Einrichtung zur Frischluftversorgung mit einem Druckluftspeicher versehen ist, worin Druckluft zur geregelt zeitweiligen Einblasung in die Saugleitung des Motorzylinders gespeichert ist.

Nach der Erfindung enthält das Verfahren die folgenden Verfahrensschritte:
- Ermitteln des Drehmomentanforderungssignals und Zuführen der Daten an die elektronische Steuereinheit,
- Ermitteln der motorischen Kennwerte und Zuführen der Werte an die elektronische Steuereinheit,
- Ermitteln der Stellung der Klappe und Zuführen der Werte an die elektronische Steuereinheit,
- Ermitteln des Luftdrucks im Innenraum des Frischgasleitungsabschnitts zwischen dem ersten Endanschluss und Klappe bzw. zweiten Endanschluss und Klappe und Zuführen der Druckwerte an die elektronische Steuereinheit,
- Ermitteln des Luftdrucks im Innenraum der Saugleitung zwischen Zylindereinlassventil und Klappe und Zuführen des Druckwerts an die elektronische Steuereinheit, sowie Ermitteln des Luftdrucks im Innenraum der Saugleitung zwischen Klappe und Turbokompressor und Zuführen des Druckwerts an die elektronische Steuereinheit,
- Verarbeiten der obigen Daten und Messwerte in der elektronischen Steuereinheit zur Herstellung von Betätigung-Ausgangssignalen zum Öffnen/Schließen des Druckluftventils der zeitweiligen Einblasung in die Saugleitung,
- und gleichzeitig Betätigen der Klappe bei Beginn der Einblasung in Richtung Schließen und bei Ende der Einblasung in Richtung Öffnen.

Nach einer vorteilhaften Ausführung des Verfahrens werden die folgenden zusätzlichen Verfahrensschritte durchgeführt:
- Ermitteln der durchschnittlichen Häufigkeit des Fahrerwunsches für Beschleunigung durch die Software in der Steuereinheit,
- Regeln der Lufteinblasung und Klappenbetätigung adaptiv zur ermittelten durchschnittlichen Häufigkeit des Fahrerwunsches, so dass der Luftverbrauch in gewissen Grenzen gehalten wird, aber ohne abrupte Änderung bei der Dauer der Lufteinblasung.

Die Erfindung wird nachfolgend ausführlich anhand eines Ausführungsbeispiels eines Dieselmotors mit Hilfe von Zeichnungen dargestellt. Es zeigt:
- Fig.1.: eine schematische Darstellung einer Einrichtung zur Frischluftversorgung einer turboaufgeladenen Kolbenbrennkraftmaschine,
- Fig.2.: den Frischgasleitungsabschnitt der Einrichtung nach Fig.1,

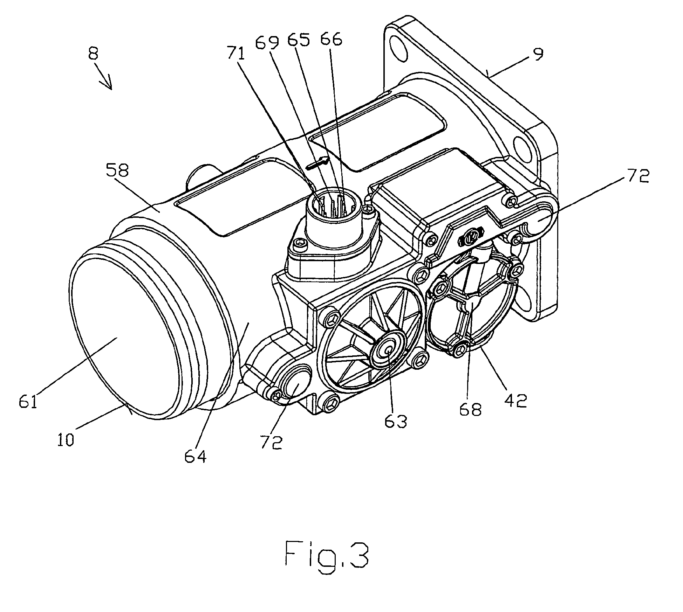

- Fig.3.: ein axonometrisches Bild des Frischgasleitungsabschnittes vom Einströmende gesehen,

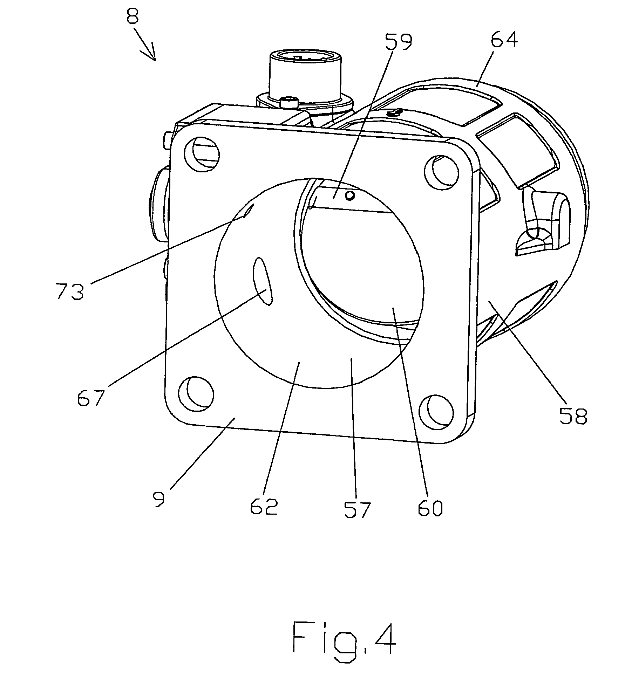

- Fig.4.: ein axonometrisches Bild des Frischgasleitungsabschnittes vom Ausströmende gesehen, und

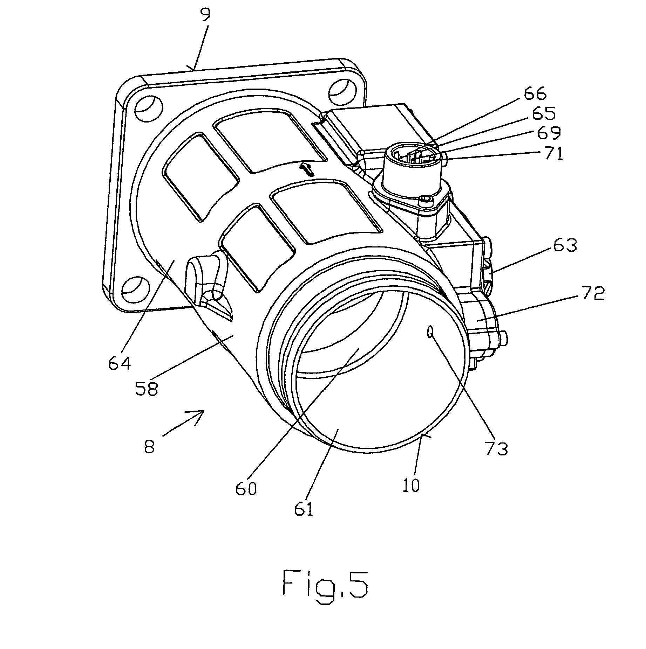

- Fig.5.: ein axonometrisches Bild des Frischgasleitungsabschnittes von oben gesehen.

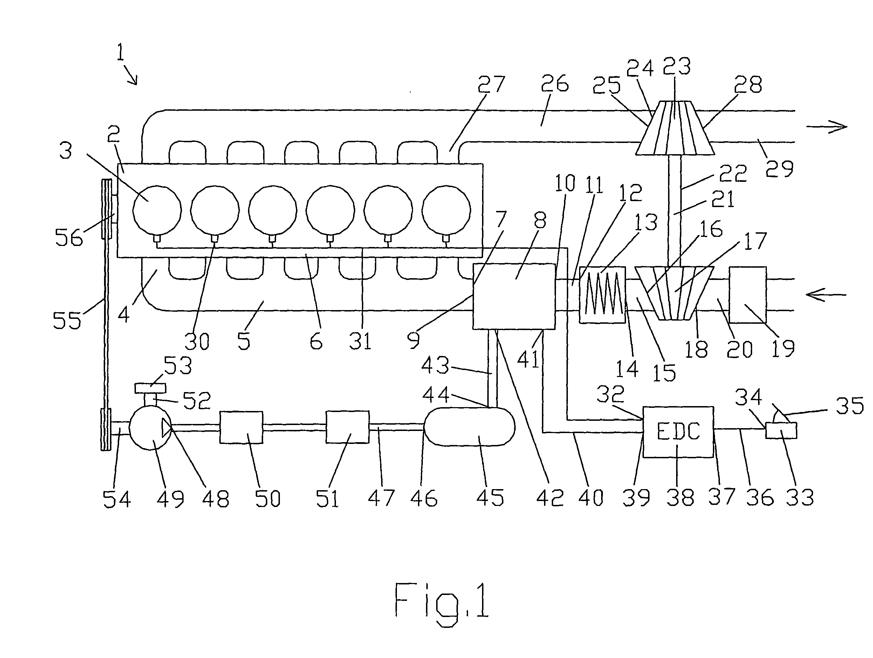

Gemäß Fig.1 besitzt der turboaufgeladene Dieselmotor 2 sechs Zylinder 3 in Reihe, deren Saugleitungen 4 an einer Sammelleitung 5 angeschlossen sind, die einen Anschlussflansch 7 aufweist, woran ein Frischgasleitungsabschnitt 8 mit seinem zweiten Endanschluss 9 zum Ausströmen angeschlossen ist. Der erste Endanschluss 10 zum Einströmen ist durch eine Leitung 11 mit der Ausströmöffnung 12 des Ladeluftkühlers 13 gekoppelt, deren Einströmöffnung 14 durch eine Leitung 15 mit der Ausströmöffnung 16 des Turbokompressors 17 gekoppelt ist. An die Einströmöffnung 18 des Turbokompressors 17 ist ein Luftfilter 19 mit der Leitung 20 angeschlossen. Der Turbokompressor 17 bildet einen Teil des Abgasturboladers 22, deren Abgasturbine 23 mit seiner Einströmöffnung 24 an die Ausströmöffnung 25 des Auspuffsammelrohrs 26 angeschlossen ist. Der Turbokompressor 17 und die Abgasturbine 23 sind an der Welle 21 befestigt. Die Zylinder 3 sind durch Auspuffleitungen 27 an das Auspuffsammelrohr 26 angeschlossen. Die Ausströmöffnung 28 der Abgasturbine 23 ist mit dem Abgasrohr 29 zusammengekoppelt.

Die Kraftstoffversorgung der Zylinder 3 erfolgt durch die Einspritzdüsen 30, deren Regelung durch die Leitung 31 vom ersten Ausgang 32 der elektronischen Steuereinheit 38 durchgeführt wird. An den Eingang 37 der elektronischen Steuereinheit 38 ist der Ausgang 34 der elektronischen Steuereinheit 33 durch die Leitung 36 angeschlossen. Die Steuereinheit 33 ist mit einem Betätigungsorgan versehen, das in diesem Ausführungsbeispiel als Gaspedal 35 ausgebildet ist. Der elektrische Anschluss 39 der elektronischen Steuereinheit 38 ist durch die Sammelleitung 40 mit dem elektrischen Anschluss 41 des Frischgasleitungsabschnittes 8 zusammengekoppelt.

Der Frischgasleitungsabschnitt 8 besitzt einen Druckluftanschluss 42, der durch die Leitung 43 an den Auslassanschluss 44 des Druckluftbehälters 45 angeschlossen ist. Der Speiseanschluss 46 des Druckluftbehälters 45 ist durch die Leitung 47 an den Druckluftanschluss 48 des Druckluftkompressors 49 angeschlossen. In die Leitung 47 sind Druckregler 50 und Lufttrockner 51 eingebaut. Der Druckluftkompressor 49 besitzt einen Saugstutzen 52, der mit einem Luftfilter 53 versehen ist. Die Welle 54 des Druckluftkompressors 49 ist durch Riemenantrieb 55 mit der Hauptwelle 56 des turboaufgeladenen Dieselmotors verbunden.

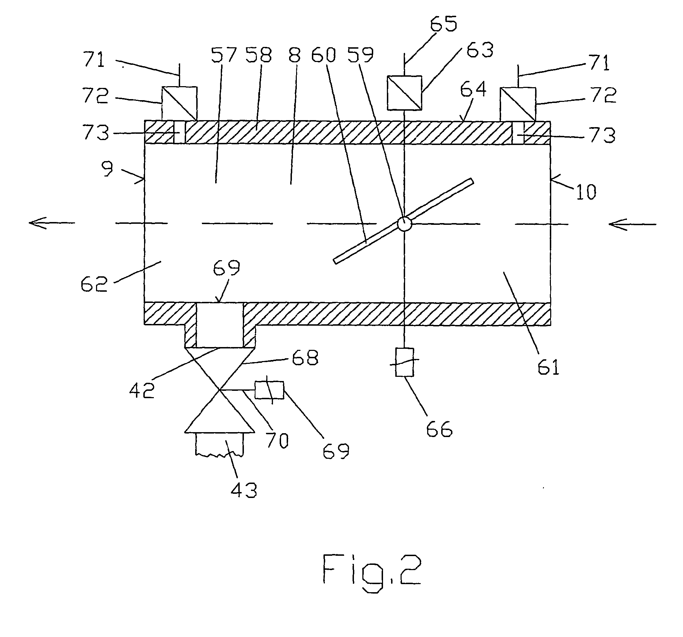

In Fig. 2 ist der Frischgasleitungsabschnitt 8 ausführlich dargestellt, der rohrartig ausgebildet ist, und den ersten Endanschluss 10 und den zweiten Endanschluss 9 besitzt, zwischen denen ein Innenraum 57 besteht, der einen Kreisquerschnitt aufweist. Der Innenraum 57 ist von der Wand 58 umschlossen, worin die Welle 59 einer Klappe 60 gelagert und durchgeführt ist. Die Klappe 60 teilt den Innenraum 57 in zwei Teile, nämlich den Einströmraum 61, der zwischen dem ersten Endanschluss 10 und der Klappe 60 entsteht, und den Ausströmraum 62, der zwischen dem zweiten Endanschluss 9 und der Klappe 60 entsteht. Die Klappe 60 hat eine geschlossene und eine voll geöffnete Stellung und dazwischen beliebige Stellungen, die durch Verdrehen der Welle 59 eingestellt werden. Die Verstellvorrichtung 66 ist in diesem Ausführungsbeispiel als elektrischer Motor ausgebildet und mit einem elektrischen Verstellvorrichtungseingang 74 und einem Ausgang 65 ausgerüstet, die entsprechend an den Anschlüssen der Sammelleitung 40 der elektronischen Steuereinheit 38 angeschlossen sind. Durch den Verstellvorrichtungseingang 74 wird die Verstellvorrichtung 66 mit Strom versorgt. Von dem Ausgang 65 wird das Signal über die Lage der Klappe 60 entnommen. In der Wand 58 ist eine Druckluft-Einströmöffnung 67 zwischen dem zweiten Endanschluss 9 und der Klappe 60 ausgebildet, woran der Druckluftanschluss 42 angeschlossen ist, der mit einer Mengenregelvorrichtung 68 ausgerüstet ist. Die Mengenregelvorrichtung 68 weist auch eine voll gesperrte Stellung auf. Der elektrische Steuerungseingang 69 der Mengenregelvorrichtung 68, die ein Ventil 70 aufweist, ist an die Sammelleitung 40 der elektronischen Steuereinheit 38 angeschlossen.

Ähnlich ist an die Sammelleitung 40 der elektronischen Steuereinheit 38 der Ausgang 71 des Druckfühlers 72 angeschlossen, der an der Wand 58 befestigt ist, der Druckmesser 73 des Druckfühlers 72, der sich in den Ausströmraum 62 des Frischgasleitungsabschnittes 8 erstreckt und ein ähnlicher Ausgang 71 des Druckfühlers 72, der an der Wand 58 befestigt ist, sowie der Druckmesser 73 des Druckfühlers 72 der sich in den Einströmraum 61 erstreckt.

Die Anordnung 1 funktioniert folgenderweise: Die Zylinder des turboaufgeladenen Dieselmotors werden mit Frischgas durch die Saugleitungen 4, Sammelleitung 5, Frischgasleitungsabschnitt 8, Leitung 11, Ladeluftkühler 13, Leitung 15, Turbokompressor 17 und Luftfilter 19 gespeist, wenn die Drehzahl konstant ist. Die Abgase verlassen die Zylinder 3 durch die Auspuffleitungen 27, Auspuffsammelrohr 26, Abgasturbine 23 und Abgasrohr 29.

Wenn der Fahrer das Gaspedal 35 schnell drückt, damit das Drehmoment, bzw. Motordrehzahl rasch erhöht werden soll, benötigt der turboaufgeladene Dieselmotor 2 mehr Kraftstoff und mehr Frischgas. Der zusätzliche Kraftstoff wird in den Zylinder 3 geführt, aber die Erhöhung der Frischgasmenge, die vom Abgasturbolader 22 geliefert wird, bleibt unzureichend. Auch der Druck des Frischgases ist niedrig, der im Innenraum 57 ständig durch den Druckmesser 73 gemessen wird und vom Druckfühler 72 zur elektronischen Steuereinheit 38 geleitet wird. In diesem Betriebszustand ist die Klappe 60 voll geöffnet. Die elektronische Steuereinheit 38 wird feststellen, dass der Druck sich im Innenraum 57 nicht genügend schnell erhöht, und stellt nach dem Steuerungsprogramm fest, daß zusätzliche Lufteinblasung durchgeführt werden soll.

Das Steuerungsprogramm hat vorbestimmte Angaben über die Bedingungen, wann die Lufteinblasung zu beginnen ist. Zum Beginn wird die Klappe 60 in Richtung Schließen verdreht und die Drucklufteinblasung von dem Druckluftbehälter 45 in den Ausströmraum 62 frei gegeben. Die Dauer der Lufteinblasung wird ebenfalls vom Steuerungsprogramm vorgegeben, das die Druckdifferenz und den absoluten Druck, die von den Druckmessern 73 gemessen worden ist, berücksichtigt.

Jeder berufliche Fernfahrer oder Autobusfahrer hat seine eigene Fahrweise, die durchschnittliche Beschleunigungswerte verlangt, er benützt bestimmte Schaltpunkte des Getriebes, dessen Kennwerte festgestellt, gespeichert und ausgearbeitet werden können. Das wird in der Rechenanlage der elektronischen Steuereinheit 38 durchgeführt und durch Software für die Dauer der Lufteinblasung und Klappenbetätigung bei der elektronischen Steuereinheit 38 verwendet. Durch die Software sollte es verhindert werden, dass der Luftverbrauch vom Behälter 45 so hoch ist, dass es die Bremssicherheit negativ beeinflusst, da der Behälter 45 Teil des gesamten Druckluftsystems ist, worin der wichtigste Teil, hinsichtlich der Sicherheit, das Bremssystem ist. Trotzdem ist eine abrupte Änderung bei der Beschleunigungshilfe nicht zulässig.

Gelöst wird diese Aufgabe im Prinzip dadurch, dass die Dauer der Lufteinblasung und Klappenbetätigung von der Häufigkeit des Fahrerwunschs adaptiv von der Steuerungssoftware geregelt wird. Dadurch wird der Luftverbrauch in gewissen Grenzen gehalten, aber ohne abrupte Änderung bei der Dauer der Lufteinblasung. So wird es vermieden, dass der Fahrer bei der Beschleunigungshilfe eine unerwartete Änderung, d.h. Verminderung, feststellt.

### Bezugszeichen

- 1: Anordnung
- 2: turboaufgeladener Dieselmotor
- 3: Zylinder
- 4: Saugleitung
- 5: Sammelleitung
- 6: Zylinderblock
- 7: Anschlussflansch
- 8: Frischgasleitungsabschnitt
- 9: zweiter Endanschluss "Ausströmung"
- 10: erster Endanschluss "Einströmung"
- 11: Leitung
- 12: Ausströmöffnung
- 13: Ladeluftkühler
- 14: Einströmöffnung
- 15: Leitung
- 16: Ausströmöffnung
- 17: Turbokompressor
- 18: Einströmöffnung
- 19: Luftfilter
- 20: Leitung
- 21: Welle
- 22: Abgasturbolader
- 23: Abgasturbine
- 24: Einströmöffnung
- 25: Ausströmöffnung
- 26: Auspuffsammelrohr
- 27: Auspuffleitung
- 28: Ausströmöffnung
- 29: Abgasrohr
- 30: Einspritzdüsen
- 31: Leitung
- 32: Ausgang
- 33: willkürliche Steuereinheit
- 34: Ausgang
- 35: Gaspedal
- 36: Leitung
- 37: Eingang
- 38: elektronische Steuereinheit
- 39: Anschluss
- 40: Sammelleitung
- 41: Anschluss
- 42: Druckluftanschluss
- 43: Leitung
- 44: Auslassanschluss
- 45: Druckluftbehaelter
- 46: Speiseanschluss
- 47: Leitung
- 48: Druckluftanschluss
- 49: Druckluftkompressor
- 50: Druckregler
- 51: Lufttrockner
- 52: Saugstutzen
- 53: Luftfilter
- 54: Welle
- 55: Riemenantrieb
- 56: Hauptwelle
- 57: Innenraum
- 58: Wand
- 59: Welle
- 60: Klappe
- 61: Einströmraum
- 62: Ausströmraum
- 63: Positionsermittlungssensor
- 64: Aussenflaeche
- 65: Ausgang
- 66: Verstellvorrichtung
- 67: Druckluft-Einströmöffnung
- 68: Mengenregelvorrichtung
- 69: elektrischer Steuereingang
- 70: Ventil
- 71: Ausgang
- 72: Druckfühler
- 73: Druckmesser
- 74: Verstellvorrichtungseingang

## Patentansprüche

1. Einrichtung zur Frischluftversorgung einer turboaufgeladenen Kolbenbrennkraftmaschine (2) mit einem Frischgasleitungsabschnitt (8) als Saugrohr, der eine verstellbare Klappe (60) und einen ersten Endanschluss (10) zur Einströmung sowie einen zweiten Endanschluss (9) zur Ausströmung aufweist, wobei die Klappe (60) zum Verstellen an einer Verstellvorrichtung (66) angekoppelt ist, und wobei zwischen der Klappe (60) und dem zweiten Endanschluss (9) ein Druckluftanschluss (42) mit Öffnung (67) in den rohrartigen Innenraum mündet, wobei der Druckluftanschluss (42) mit einer ein Ventil (70) mit einer gesperrten und beliebig geöffneten Stellungen aufweisenden Mengenregelvorrichtung (68) zusammenwirkt, die über einen elektrischen Eingang (69) ansteuerbar ist, der an den Anschluss (39) einer elektronischen Steuereinheit (38) angeschlossen ist, wobei die Verstellvorrichtung (66) der Klappe (60) von der Mengenregelvorrichtung (68) und/oder der elektrischen Steuereinheit (38) derart zwangsbetätigt ist, dass der voll geöffneten Stellung der Klappe (60) eine voll gesperrte Stellung der Mengenregelvorrichtung (68) zugeordnet ist, **dadurch gekennzeichnet, dass** am Anschluss (39) der elektronischen Steuereinheit (38) zum einen der Ausgang (71) eines ersten Druckfühlers (72), dessen Druckmesser (73) im rohrartigen Innenraum (61) zwischen Klappe (60) und dem ersten Endanschluss (10) angeordnet ist, und zum anderen der Ausgang (71) eines zweiten Druckfühlers (72), dessen Druckmesser (73) im rohrartigen Innenraum (62) zwischen Klappe (60) und dem zweiten Endanschluss (9) angeordnet ist, angebunden ist.

2. Einrichtung nach Anspruch 1, **dadurch gekennzeichnet, dass** in der elektronischen Steuereinheit (38) ein Drehmomentanforderungssignal aus den folgenden Quellen stammt Gaspedal, Antriebsschlupfregelung, Tempomat, elektrisches Stabilisationsprogramm, Mittel die dem Motorsteuersystem eine externe Drehmomentanforderung zuleiten.

3. Einrichtung nach Anspruch 1, **dadurch gekennzeichnet, dass** zur direkten Betätigung durch die elektrische Steuereinheit (38) die Verstellvorrichtung (66) mit einem Positionsermittlungssensor (63) ausgebildet ist.

4. Verfahren zum Verbessern des Beschleunigungs- und Emissionsverhaltens einer Fahrzeug-Kolbenbrennkraftmaschine, insbesondere eines Dieselmotors mit Turboaufladung, wobei eine Einrichtung nach einem der vorstehenden Ansprüche mit einem Druckluftspeicher versehen wird, worin Druckluft zur geregelt zeitweiligen Einblasung in den Frischgasleitungsabschnitt (8) des Motorzylinders gespeichert wird, **gekennzeichnet durch** die folgenden Verfahrensschritte:
- Ermitteln des Drehmomentanforderungssignals und Zuführen der Daten an die elektronische Steuereinheit (38),
- Ermitteln der motorischen Kennwerte und Zuführen der Kennwerte an die elektronische Steuereinheit (38),
- Ermitteln des Luftdrucks im Innenraum der Saugleitung zwischen Zylindereinlassventil und Klappe (60) und Zuführen des Druckwerts an die elektronische Steuereinheit (38), sowie Ermitteln des Luftdrucks im Innenraum der Saugleitung zwischen Klappe (60) und Turbokompressor und Zuführen des Druckwerts an die elektronische Steuereinheit (38),
- Verarbeiten vorgenannter Daten und Messwerte in der elektronischen Steuereinheit (38) zur Erstellung von Betätigungs-Ausgangssignalen zum Öffnen/Schließen des Ventils (70) der zeitweiligen Einblasung in den Frischgasleitungsabschnitt (8) und gleichzeitigen Betätigung der Klappe (60) beim Beginnen der Einblasung in Richtung Schließen und beim Aufhören mit der Einblasung in Richtung Öffnen.

5. Verfahren nach Anspruch 4, **gekennzeichnet durch** die folgenden Verfahrensschritte:
- Ermitteln der durchschnittlichen Häufigkeit des Fahrerwunsches für eine Beschleunigung **durch** die Software in der Steuereinheit (38),
- Regeln der Lufteinblasung und Klappenbetätigung adaptiv zur ermittelten durchschnittlichen Häufigkeit des Fahrerwunsches um zu Erreichen, dass der Luftverbrauch in definierten Grenzen gehalten wird, jedoch ohne abrupte Änderung bei der Dauer der Lufteinblasung.

## Claims

1. A device for supplying fresh air to a turbocharged piston internal combustion engine (2) having a fresh gas line section (8) as an intake manifold which has an adjustable flap (60) and a first end port (10) for flowing in and a second end port (9) for flowing out, the flap (60) being coupled to an adjustment device (66) for the purpose of adjustment, and a compressed air port (42) with an opening (67) leading into the tubular interior between the flap (60) and the second end port (9), the compressed air port (42) interacting with a quantity regulating device (68) which has a valve (70) with a blocked position and any desired number of opened positions, and can be actuated by means of an electric input (69) which is connected to the terminal (39) of an electronic control unit (38), the adjustment device (66) of the flap (60) being forcibly activated by the quantity regulating device (68) and/or the electric control unit (38) in such a way that the fully opened position of the flap (60) is assigned a fully blocked position of the quantity regulating device (68), **characterized in that,** on the one hand, the output (71) of the first pressure pickup (72) whose pressure meter (73) is arranged in the tubular interior (61) between the flap (60) and the first end port (10) and, on the other hand, the output (71) of a second pressure pickup (72) whose pressure meter (73) is arranged in the tubular interior (62) between the flap (60) and the second end port (9) are connected to the terminal (39) of the electronic control unit (38).

2. The device as claimed in claim 1, **characterized in that,** in the electronic control unit (38), a torque request signal originates from the following sources: accelerator pedal, traction controller, cruise controller, electric stability program, means which feed an external torque request to the engine control system.

3. The device as claimed in claim 1, **characterized in that** the adjustment device (66) is embodied with a position determining sensor (63) for direct activation by the electric control unit (38).

4. A method for improving the acceleration behavior and emission behavior of a vehicle piston internal combustion engine, in particular of a diesel engine with turbocharging, a device as claimed in one of the preceding claims being provided with a compressed air accumulator in which compressed air is stored to be blown in in a regulated, temporary fashion into the fresh gas line section (8) of the engine cylinder, **characterized by** the following method steps:
- determination of the torque request signal and feeding of the data to the electronic control unit (38),
- determination of the engine characteristic values and feeding of the characteristic values to the electronic control unit (38),
- determination of the air pressure in the interior of the intake line between the cylinder inlet valve and flap (60) and feeding of the pressure value to the electronic control unit (38), as well as determination of the air pressure in the interior of the intake line between the flap (60) and turbocompressor, and feeding of the pressure value to the electronic control unit (38),
- processing of the abovementioned data and the measured values in the electronic control unit (38) in order to produce activation output signals for opening/closing the valve (70) for the temporary blowing into the fresh gas line section (8) and simultaneous activation of the flap (60) in the closing direction at the start of the blowing in process and in the opening direction at the end of the blowing in process.

5. The method as claimed in claim 4, **characterized by** the following method steps:
- determination of the average frequency of the driver's request for acceleration by the software in the control unit (38),
- regulation of the blowing in of air and activation of the flap in an adaptive fashion with respect to the determined average frequency of the driver's request, in order to ensure that the air consumption is kept within defined limits, but without an abrupt change in the duration of the air blowing in process.

## Revendications

1. Dispositif à alimenter un moteur à combustion interne à pistons à suralimentation par turbosoufflante (2) en air frais, qui comprend un étage de canalisation de gaz frais (8) en tant que tubulure d'admission, renfermant un clapet ajustable (60) et un premier raccord terminal (10) pour l'admission ainsi qu'un deuxième raccord terminal (9) pour l'échappement, audit clapet (60) étant accouplé à un dispositif d'ajustage (66) pour son réglage et à un raccord de l'air comprimé (42) à une ouverture (67) s'ouvrant entre ledit clapet (60) et ledit deuxième raccord terminal (9) dans l'intérieur tubulaire, dans lequel dispositif ledit raccord de l'air comprimé (42) interagit avec un dispositif de réglage de débit (68) renfermant une soupape (70) présentant une position de fermeture et des positions ouvertes à volonté, ce dispositif de réglage étant commandable via une entrée électrique (69) raccordée au connecteur (39) d'une unité de commande électronique (38), dans lequel dispositif ledit dispositif d'ajustage (66) dudit clapet (60) est actionné de manière forcée par ledit dispositif de réglage de débit (68) et/ou par ladite unité de commande électronique (38) d'une telle façon, qu'une position complètement fermée dudit dispositif de réglage de débit (68) soit affectée à la position complètement ouverte dudit clapet (60), **caractérisé en ce que** la sortie (71) d'un premier capteur de pression (72), dont l'indicateur de pression (73) est disposé dans ledit intérieur tubulaire (61) entre ledit clapet (60) et ledit premier raccord terminal (10), d'un côté, et la sortie (71) d'un deuxième capteur de pression (72), dont l'indicateur de pression (73) est disposé dans ledit intérieur tubulaire (61) entre ledit clapet (60) et ledit deuxième raccord terminal (9), d'autre côté, sont connectées audit connecteur (39) de ladite unité de commande électronique (38).

2. Dispositif selon la revendication 1, **caractérisé en ce qu'**un signal de demande de couple moteur dans ladite unité de commande électronique (38) est causé par les sources suivantes: l'accélérateur, le système d'antipatinage à l'accélération, limiteur automatique de vitesse, programme électrique de stabilisation, moyens communiquant, aux système de commande du moteur, une demande de couple moteur.

3. Dispositif selon la revendication 1, **caractérisé en ce que** le dispositif d'ajustage (66) est configuré à un détecteur (63) à déterminer la position pour la commande directe par ladite unité de commande électronique (38).

4. Procédé à améliorer le comportement en accélération et émission d'un moteur à combustion interne à pistons d'un véhicule, en particulier d'un moteur à allumage par compression à suralimentation par turbosoufflante, dans lequel un dispositif selon une quelconque des revendications précédentes est pourvu d'un accumulateur de l'air comprimé, où de l'air comprimé est accumulé pour l'insufflation contrôlée temporaire dans ledit étage de canalisation de gaz frais (8) du cylindre du moteur, **caractérisé par** les étapes de procédé suivantes :
- identification dudit signal de demande de couple moteur et alimentation des données à ladite unité de commande électronique (38),
- identification des valeurs caractéristiques de motorisation et alimentation de ces valeurs caractéristiques à ladite unité de commande électronique (38),
- identification de la pression d'air à l'intérieur du canal d'aspiration entre ladite soupape d'entrée au cylindre et ledit clapet (60) et alimentation de la valeur de pression à ladite unité de commande électronique (38), ainsi que l'identification de la pression d'air à l'intérieur du canal d'aspiration entre ledit clapet (60) et le turbocompresseur et alimentation de la valeur de pression à ladite unité de commande électronique (38),
- traitement des données et valeurs mesurées susmentionnées dans ladite unité de commande électronique (38) afin d'engendre des signaux de commande de sortie à ouvrir/fermer ladite soupape (70) pour l'insufflation temporaire dans ledit étage de canalisation de gaz frais (8) et actionnement simultané dudit clapet (60) au début de l'insufflation vers la position de fermeture et, quand l'insufflation se termine, vers la position d'ouverture.

5. Procédé selon la revendication 4, **caractérisé par** les étapes de procédé suivantes :
- identification de la fréquence moyenne du désir du chauffeur d'accélérer par le logiciel dans ladite unité de commande (38),
- réglage de l'insufflation d'air et de l'actionnement du clapet de façon adaptive à la fréquence moyenne du désir du chauffeur afin d'achever une consommation d'air retenue au-dedans des limites définis, mais sans aucune modification brusque de la durée de l'insufflation d'air.
